# EUROPEAN PATENT APPLICATION

(11) **EP 4 822 164 A1**
(43) Date of publication of application: **14.10.2026**
(21) Application number: 26159413.9
(22) Date of filing: 18.02.2026
(51) Int. Cl.: F02D 19/06, F02D 41/00

(54) **MULTI-FUEL ENGINES AND CONTROLS USING HYDROGEN FUEL SUBSTITUTION**

(30) Priority: 05.03.2025 US 202519070937
(71) Applicant: Cummins Inc., Columbus, IN 47201 (US)
(72) Inventor: LANGENDERFER, David, Columbus, 47203 (US); KOLHOUSE, J. Steven, Colombus, 47201 (US); ZUR LOYE, Axel, Battle Ground, 98604 (US); RUTH, Michael, Franklin, 46131 (US)
(74) Representative: Cleveland Scott York

(57) **Abstract**

Engine systems are disclosure that include a multi-fuel engine operable to selectably combust varying proportions of a first type of fuel and a second type of fuel, such as gaseous hydrogen fuel. An electronic control system and method control the substitution of the hydrogen fuel for emissions reduction and/or aftertreatment regeneration. Substitution of hydrogen fuel may also be monitored and controlled to manage emissions credits.

## Description

### TECHNICAL FIELD

The present application relates generally to engine systems that include multi-fuel engines, and more particularly to multi-fuel engines using hydrogen fuel substitution.

### BACKGROUND

Multi-fuel engines employ at least two different types of fuel during combustion during at least some operating conditions. Present approaches to operating multi-fuel engines suffer from a number of drawbacks and disadvantages, including those relating to substitution of the second fuel for the first fuel during certain operating conditions. There remains a significant unmet need for the unique apparatuses, methods and systems disclosed herein.

### DISCLOSURE OF ILLUSTRATIVE EMBODIMENTS

For the purposes of clearly and concisely summarizing and describing exemplary embodiments of the invention, the manner and process of making and using the same, and to enable the practice, making and use of the same, reference will now be made to certain exemplary embodiments, including those illustrated in the figures, and specific language will be used to describe the same. It shall nevertheless be understood that no limitation of the scope of the invention is thereby created, and that the invention includes and protects such alterations, modifications, and further applications of the exemplary embodiments as would occur to one skilled in the art.

### SUMMARY

A multi-fuel engine is disclosed along with controls, apparatuses, methods, and systems relating to the same. An engine system includes a multi-fuel engine structured to selectably combust a first type of fuel and a second, different type of fuel, such as gaseous hydrogen fuel. A method of operating the engine system is also disclosed.

In some embodiments, the engine system includes an electronic control system is configured to control the injection and/or substitution of hydrogen fuel for aftertreatment regeneration and/or for emissions reduction. In some embodiments, a method includes controlling the injections and/or substitution of hydrogen fuel for aftertreatment regeneration and/or emissions reduction.

In some embodiments, the amount and renewable characteristic of hydrogen fuel that is substituted for the first fuel is determined by the electronic control system in order to, for example, obtain emissions credits. In some embodiments, a method includes monitoring and recording hydrogen fuel substitution, including the renewable characteristic and the amount of hydrogen fuel that is substituted.

Further embodiments, forms, objects, features, advantages, aspects, and benefits shall become apparent from the following description and drawings.

### BRIEF DESCRIPTION OF THE DRAWINGS

FIG. 1 is a schematic diagram of an exemplary internal combustion engine system including a multi-fuel engine and a fueling system.
FIG. 2 is a schematic diagram of further features of the fueling system and multi-fuel engine of the engine system of FIG. 1.
FIG. 3 is a schematic diagram of an exemplary electronic control system according for the engine system, multi-fuel engine, and/or fueling system of the present disclosure.
FIG. 4 is a flow diagram illustrating an exemplary control process for operation of the engine system and multi-fuel engine of FIGs. 1 and 2.
FIG. 5 is a flow diagram illustrating another exemplary control process for operation of the engine system and multi-fuel engine of FIGs. 1 and 2.

### DETAILED DESCRIPTION OF ILLUSTRATIVE EMBODIMENTS

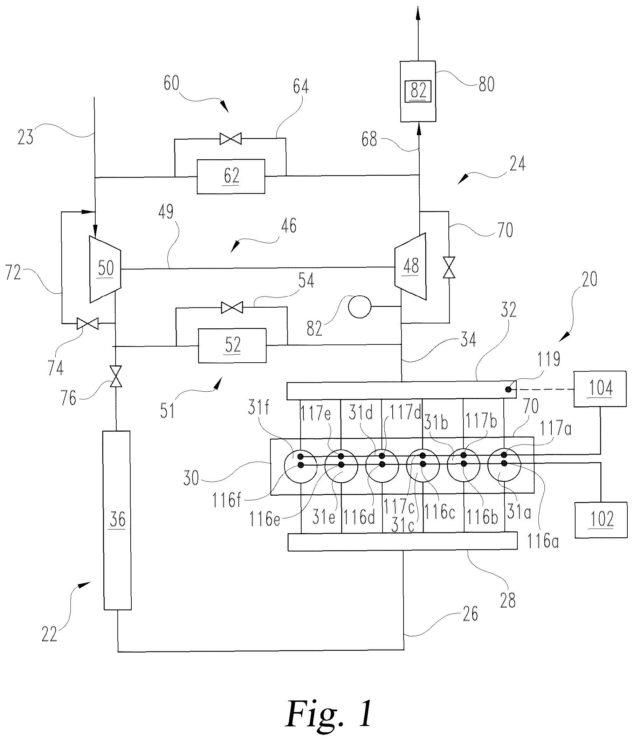

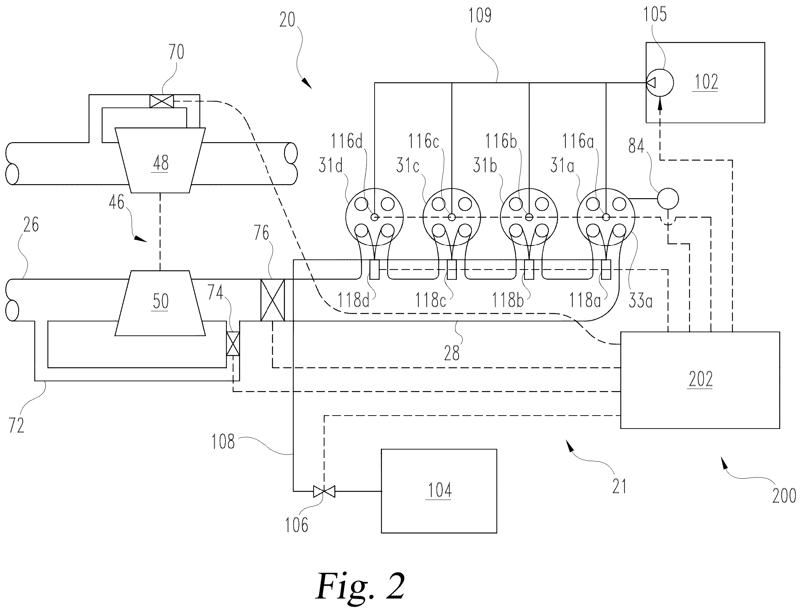

With reference to FIGs. 1 and 2, there are illustrated certain aspects of an engine system 20 and multi-fuel internal combustion engine 30 including a multi-fuel fueling system 21. Engine system 20 is operable to combust a variable proportion of two or more types of fuel. Fueling system 21 is operable to provide fueling to multi-fuel engine 30 from a first fuel source 102 and a second fuel source 104 in a variable proportion. First fuel source 102 and second fuel source 104 store a first fuel and a second fuel, respectively, and the first fuel and the second fuel are of different types of fuel. Engine system 20 and fueling system 21 are illustrated and described as providing two types of fuel for combustion, however, additional fuel sources may also be included to store and provide additional different types of fuel for combustion.

Engine system 20 includes multi-fuel engine 30 connected with an intake system 22 for providing a charge flow to multi-fuel engine 30 and an exhaust system 24 for output of exhaust gases. In certain embodiments, multi-fuel engine 30 comprises a lean combustion engine such as a diesel cycle engine that uses a primary or first fuel that is a liquid fuel such as diesel fuel and a secondary or second fuel that is a gaseous fuel. In an embodiment, the gaseous fuel is hydrogen fuel.

The hydrogen fuel used with engine system 20 and/or fueling system 21 can be produced from renewable or non-renewable resources. Renewable hydrogen gas can be made from renewable resources with zero greenhouse gas emissions, and may be referred to as "green" hydrogen. Green hydrogen is typically produced using clean electricity from energy resources such as wind or solar to electrolyze water. Electrolyzers use an electrochemical reaction to split water into its components of hydrogen and oxygen, emitting zero-carbon dioxide in the process.

Other hydrogen production processes result in non-renewable hydrogen gas, i.e. hydrogen produced using non-renewable energy sources and/or processes that result in greenhouse gas emissions. Non-renewable resources that may be used to produce hydrogen include, for example, natural gas, methane, black coal, lignite, and nuclear energy. These non-renewable resources may be employed in various production processes, such as steam reformation, gasification, electrolysis, methane pyrolysis, and fracking of naturally occurring deposits.

These non-renewable resources and associated production processes may have differing level of environmental impact, depending on the amount of greenhouse gases created in the production process and whether or not the greenhouse gases are captured. For example, hydrogen gas produced by natural gas through steam reformation in combination with carbon capture and storage and captured is considered to be low-emission non-renewable hydrogen with a high renewable characteristic, while hydrogen gas produced through gasification of coal is high-emission non-renewable hydrogen gas with a low or zero renewable characteristic.

Renewable hydrogen fuel can be produced using clean electricity from renewable energy resources such that zero greenhouse gases are emitted in the production process, and can be referred to as "green hydrogen" since it is 100% renewable. Non-renewable hydrogen fuel, on the other hand, is produced by processes from non-renewable resources and/or that result in at least some greenhouse gas emissions and therefore have a renewable characteristics that is less than 100% renewable. Non-renewable hydrogen fuel may be referred to as "blue hydrogen", "gray hydrogen", "pink hydrogen", "brown hydrogen", "black hydrogen", and/or "turquoise hydrogen" depending on the level or characteristic of renewability, which can include a renewable characteristic ranging from less than 100% to 0% renewable depending on the amount of greenhouse gases produced in its production.

Other embodiments of the present disclosure contemplate the gaseous fuel can be, for example, natural gas, bio-gas, commercially available gas, methane, ethane, propane (LPG), butane, ethanol, methanol, ammonia, producer gas, field gas, nominally treated field gas, well gas, nominally treated well gas, liquefied natural gas (LNG), compressed natural gas, landfill gas, condensate, coal-bed methane (CBM), liquid fuels that are readily vaporized (such as gasoline), and/or mixtures of these.

In some embodiments, the second fuel could be a liquid fuel, such as ethanol or methanol. In some embodiments, the second fuel is a fuel that is in liquid phase in a fuel storage tank and in a gas phase when delivered, such as propane or ammonia. In an embodiment, the second fuel is a fuel other than hydrogen fuel. In an embodiment, the second fuel is a fuel that is not in a gas phase during storage and/or when delivered for combustion.

Other types of first and second fuels may also be utilized. In certain embodiments, the first fuel is a fuel suitable for lean burning, and the second fuel is a fuel that utilizes stoichiometric or near-stoichiometric combustion except when combined with the first fuel during a multi-fueling operation. In an embodiment, the first fuel has a renewable characteristics, such as the first fuel is renewable diesel fuel (e.g. hydrotreated vegetable oil) or fossil diesel fuel, and the renewable characteristic of the first fuel used over time is tracked.

Multi-fuel engine 30 includes an engine block 70 that at least partially defines the cylinders 31a, 31b, 31c, 31d, 31e, 31f (collectively and individually referred to as cylinder 31 or cylinders 31.) A plurality of pistons (not shown) are slidably disposed within respective cylinders 31 to reciprocate between a top-dead-center position and a bottom-dead-center position. Each of the cylinders 31, its respective piston, and the cylinder head form a combustion chamber. In the illustrated embodiment, multi-fuel engine 30 includes six such combustion chambers configured in an in-line arrangement. However, it is contemplated that multi-fuel engine 30 may include a greater or lesser number of combustion chambers and that the combustion chambers may be disposed in an "in-line" configuration, a "V" configuration, a "W" configuration, a flat configuration, or in any other suitable configuration.

In one embodiment, multi-fuel engine 30 is a four stroke engine. That is, for each complete engine cycle (i.e., for every two full crankshaft rotations), each piston of each cylinder 31 moves through an intake stroke, a compression stroke, a combustion or power stroke, and an exhaust stroke. Thus, during each complete cycle for the depicted six cylinder engine, there are six strokes during which air is drawn into individual combustion chambers from intake supply conduit 26 and six strokes during which exhaust gas is supplied to exhaust manifold 32. However, two stroke engines are not precluded.

The multi-fuel engine 30 includes cylinders 31 connected to the intake system 22 to receive a charge flow and connected to exhaust system 24 to release exhaust gases produced by combustion of the first and/or second fuels. Exhaust system 24 may provide exhaust gases to a turbocharger 46, although a turbocharger is not required. In still other embodiments, multiple turbochargers are included to provide high pressure and low pressure turbocharging stages that compress the intake flow.

Exhaust system 24 can be connected to intake system 22 with one or both of a high pressure exhaust gas recirculation (EGR) system 51 and a low pressure EGR system 60. EGR systems 51, 60 may include an EGR cooler 52, 62 and an EGR bypass 54, 64, respectively. In other embodiments, one or both of EGR systems 51, 60 are omitted. When provided, EGR system(s) 51, 60 provide exhaust gas recirculation to multi-fuel engine 30 in certain operating conditions. In any EGR arrangement during at least certain operating conditions, at least a portion of the exhaust output of cylinder(s) 31 is recirculated to the engine intake system 22.

In the high pressure EGR system 51, the exhaust gas from the cylinder(s) 31 takes off from exhaust system 24 upstream of turbine 48 of turbocharger 46 and combines with intake flow at a position downstream of compressor 50 of turbocharger 46 and upstream of an intake manifold 28 of multi-fuel engine 30. In the low pressure EGR system 60, the exhaust gas from the cylinder(s) 31a-31f takes off from exhaust system 24 downstream of turbine 48 of turbocharger 46 and combines with intake flow at a position upstream of compressor 50 of turbocharger 46. The recirculated exhaust gas may combine with the intake gases in a mixer (not shown) of intake system 22 or by any other arrangement. In certain embodiments, the recirculated exhaust gas returns to the intake manifold 28 directly.

Intake system 22 includes one or more inlet supply conduits 26 connected to an engine intake manifold 28, which distributes the charge flow to cylinders 31 of multi-fuel engine 30. Exhaust system 24 is also coupled to multi-fuel engine 30 with an engine exhaust manifold 32. Exhaust system 24 includes an exhaust conduit 34 extending from exhaust manifold 32 to an exhaust valve. In the illustrated embodiment, exhaust conduit 34 extends to turbine 48 of turbocharger 46. Turbine 48 includes a valve such as controllable wastegate 70 or other suitable bypass that is operable to selectively bypass at least a portion of the exhaust flow from turbine 48 to reduce boost pressure and engine torque under certain operating conditions. In another embodiment, turbine 48 is a variable geometry turbine. In other embodiments, the exhaust valve is an exhaust throttle and/or wastegate.

In one embodiment, exhaust conduit 34 is flow coupled to exhaust manifold 32, and may also include one or more intermediate flow passages, conduits, or other structures. Exhaust conduit 34 extends to turbine 48 of turbocharger 46. Turbocharger 46 may be any suitable turbocharger known in the art, including fixed-geometry turbocharger, variable-geometry turbine turbochargers and waste-gated turbochargers. Turbocharger 46 may also include multiple turbochargers. Turbine 48 is connected via a shaft 49 to compressor 50 that is flow coupled to inlet supply conduit 26.

Exhaust from turbine 48 is provided to outlet conduit 68 which provides exhaust to an aftertreatment system 80. The aftertreatment system 80 may include, for example, one or more regeneratable components 82 such as oxidation devices (DOC), particulate removing devices (DPF, CDPF), and/or constituent absorbers or reducers (SCR, AMOX, LNT). Aftertreatment system 80 may also include reductant systems, heaters, as well as additional or alternate exhaust aftertreatment components.

Compressor 50 receives fresh air flow from intake air supply conduit 23. Second fuel source 104 may also be flow coupled at or upstream of the inlet to compressor 50 or downstream of compressor 50, as discussed further below. Intake system 22 may further include a compressor bypass 72 that connects a downstream or outlet side of compressor 50 to an upstream or inlet side of compressor 50. Compressor bypass 72 includes a control valve 74 that is selectively opened to allow charge flow to be returned to the inlet side of compressor 50 to reduce compressor surge under certain operating conditions, such as when an intake throttle 76 is closed. Inlet supply conduit 26 may include a charge air cooler 36 downstream from compressor 50 and intake throttle 76. In another embodiment, a charge air cooler 36 is located in the intake system 22 upstream of intake throttle 76. Charge air cooler 36 may be disposed within inlet air supply conduit 26 between multi-fuel engine 30 and compressor 50, and embody, for example, an air-to-air heat exchanger, an air-to-liquid heat exchanger, or a combination of both to facilitate the transfer of thermal energy to or from the flow directed to multi-fuel engine 30.

In operation of engine system 20, fresh air is supplied through inlet air supply conduit 23. The fresh air flow or combined flows can be filtered, unfiltered, and/or conditioned in any known manner, either before or after mixing with the EGR flow from EGR systems 51, 60 when provided. The intake system 22 may include components configured to facilitate or control introduction of the charge flow to multi-fuel engine 30, and may include intake throttle 76, one or more compressors 50, and charge air cooler 36. The intake throttle 76 may be connected upstream or downstream of compressor 50 via a fluid passage and configured to regulate a flow of atmospheric air and/or combined air/EGR flow to multi-fuel engine 30. Compressor 50 may be a fixed or variable geometry compressor configured to receive air or air and fuel mixture from fuel source 104 and compress the air or combined flow to a predetermined pressure level before multi-fuel engine 30. The charge flow is pressurized with compressor 50 and sent through charge air cooler 36 and supplied to engine 30 through intake supply conduit 26 to engine intake manifold 28.

Fueling system 21 is configured to provide multiple types of fuel to multi-fuel engine 30. In an embodiment, fueling system 21 includes first fuel source 102 and second fuel source 104. First fuel source 102 is configured to provide a first fuel type to cylinders 31 via one or more direct injectors 116a, 116b, 116c, 116d, 116e, 116f (collectively and individually referred to as direct injector(s) 116) at the corresponding cylinder 31a, 31b, 31c, 31d, 31e, 31f. Second fuel source 104 is structured to provide a second fuel type and is connected to cylinders 31 via one or more direct injectors 117a, 117b, 117c, 117d, 117e, 117f (collectively and individually referred to as direct injector(s) 117) at the corresponding cylinder 31a, 31b, 31c, 31d, 31e, 31f as shown in FIG. 1.

Alternatively or additionally, second fuel source 104 is connected to cylinders 31 via one or more port injectors 118a, 118b, 118c, 118d... (collectively and individually referred to as port injector(s) 118) at the corresponding cylinder 31a, 31b, 31c, 31d.... as shown in FIG. 2. It should be understood that the embodiment of FIG. 2 only shows four of cylinders 31 from FIG. 1, but more or fewer cylinders are also contemplated. In certain embodiments, second fuel source 104 may be directly connected to exhaust manifold 32 with a manifold injector 119 to provide the second fuel downstream of cylinders 31, as shown in FIG. 1 and discussed further below.

In certain embodiments, the cylinders 31 each include at least one direct injector 116 for delivering fuel to the combustion chamber thereof from a primary fuel source, such as first fuel source 102. In addition, one or more port injectors 118 can be provided for delivery or induction of fuel from the second fuel source 104 with the charge flow delivered to cylinders 31. Such devices may be electronically controllable and may include one or more actuators for controlling flow of fuel from the second fuel source 104. In certain forms at least one port injector 118 or direct injector 117 at each cylinder 31 is provided for delivery of fuel from the second fuel source 104 with the charge flow delivered to cylinders 31 and/or for direct injection into the cylinders 31.

The first fuel source 102 is controlled to provide the sole fueling at certain operating conditions of multi-fuel engine 30, and fueling from the second fuel source 104 is provided to replace or substitute a portion of fuel from the first fuel source 102 at other operating conditions to provide a dual flow of fuel to multi-fuel engine 30. An electronic control system 200 includes one or more electronic control units (ECU) 202 and/or a multi-fuel controller 250 structured to control the flow of liquid first fuel from first source 102 and the flow of gaseous fuel from second source 104 in accordance with the controls disclosed herein.

A direct injector, as utilized herein, includes any fuel injection device that injects fuel directly into a cylinder, and is capable of delivering fuel into the cylinder when the intake valve(s) and/or exhaust valve(s) are closed. The direct injector may be structured to inject fuel at the top of the cylinder or laterally of the cylinder. In certain embodiments, the direct injector may be structured to inject fuel into a combustion pre-chamber. Each cylinder 31 may include one or more direct injectors 116a-116f and direct injectors 117a-117f. The direct injectors 116 may be the primary fueling device for first fuel source 102 for each of the cylinders 31. In some embodiments, the direct injectors 117 may be the primary fueling device for second fuel source 104 for each of the cylinders 31.

A port injector, as utilized herein, includes any fuel injection device that injects the second fuel outside the engine cylinder in the intake manifold to form the air-fuel mixture. The port injector injects the fuel towards the intake valve. During the intake stroke, the downwards moving piston draws in the air/fuel mixture past the open intake valve and into the combustion chamber. Each cylinder 31a, 31b, 31c, 31d may include one or more port injectors 118a, 118b, 118c, 118d, respectively. In one embodiment, the port injectors 118 may be the primary fueling device for second fuel source 104 to the cylinders 31. In another embodiment, the second fuel source 104 can be connected to one or more of the cylinders 31 with one or more direct injectors 117 in addition to port injectors 118. A flow control valve 106 can be provided to control the flow of gaseous fuel to multi-fuel engine 30 from second fuel source 104.

In certain embodiments, each cylinder 31 includes at least one direct injector 116 that is capable of providing all of the designed fueling amount from first fuel source 102 for the cylinders 31 at any operating condition. Second fuel source 104 provides a flow of a second fuel to each cylinder 31 through a corresponding port injector 1118 to provide a second fuel flow to the cylinders 31 to achieve desired operational outcomes, such as emissions reduction, aftertreatment regeneration, emissions offset credits, improved efficiency, improved fuel economy, improved high load operation, improved light load operation, and other outcomes.

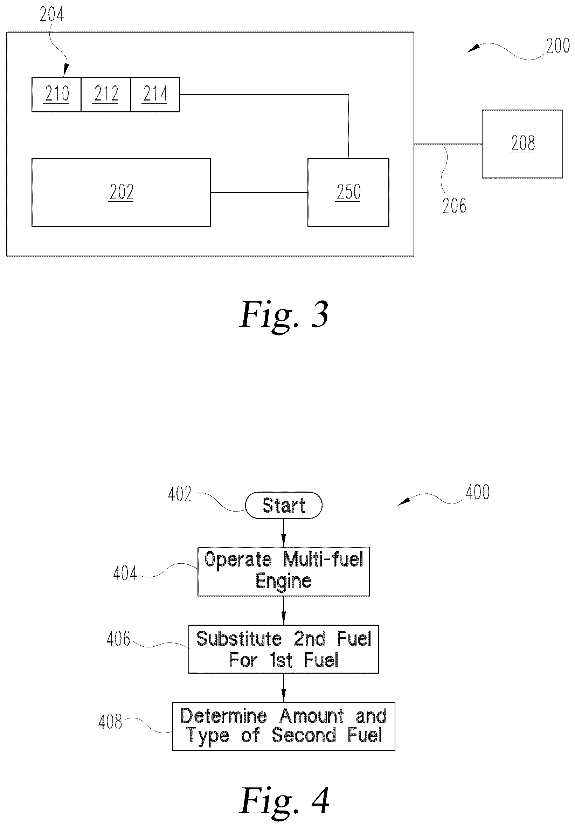

Referring further to FIG. 2, electronic control system 200 is structured and configured to control operation of a number of aspects of engine system 20 and fueling system 21, including the provision of and combustion of multiple types of fuel. In certain embodiments, such as shown in FIG. 3, ECU 202 and/or multi-fueling controller 250 forms a portion of electronic control system 200, and includes one or more computing devices having memory, processing, and communication features. ECU 202 and/or multi-fueling controller 250 may comprise a single device, a distributed device or multiple devices in operative communication with one another. The functions of ECU 202 and/or multi-fueling controller 250 may be performed by hardware, software, firmware or a combination thereof. Instructions utilized by ECU 202 and/or multi-fueling controller 250 may be provided on a computer readable storage medium. ECU 202 and/or multi-fueling controller 250 may communicate with the sensors or actuators of engine system 20 and/or fueling system 21 in a variety of manners, including through direct communication, communication over a datalink, and/or through communication with other controllers or portions of the processing subsystem that provide sensor and/or actuator information to ECU 202 and/or multi-fueling controller 250.

One embodiment of engine system 20 includes fueling system 21 with at least one first fuel source 102 to provide a first fuel flow to all the cylinders 31 and at least one second fuel source 104 that provides a second fuel flow to all the cylinders 31 in addition to the first fuel flow under certain operating conditions. First fuel source 102 includes first fuel pump 105 that is connected to ECU 202 and/or multi-fueling controller 250, and the second fuel source 104 includes one or more pressurized tanks and includes, in one embodiment, at least one flow control valve 106 that is connected to ECU 202 and/or multi-fueling controller 250. Each of the cylinders 31 includes an injector, such as direct injectors 116 associated with each of the illustrated cylinders 31. Direct injectors 116 are electrically connected with ECU 202 and/or multi-fueling controller 250 to receive fueling commands that provide a fuel flow to the respective cylinder 31 in accordance with a fuel command determined according to engine operating conditions and operator demand by reference to fueling maps, control algorithms, or other fueling rate/amount determination source stored in ECU 202 and/or multi-fueling controller 250. First fuel pump 105 is connected to each of the direct injectors 116 with a first fuel line 109. First fuel pump 105 is operable to provide a first fuel flow from first fuel source 102 to each of the cylinders 31 in a rate, amount and timing determined by ECU 202 and/or multi-fueling controller 250 that achieves a desired power and exhaust output from cylinders 31.

Second fuel source 104 is connected to direct injectors 117 and/or port injectors 118 with a second fuel line 108. A control valve 106 can be provided in fuel line 108 and/or at one or more other locations in fueling system 21, and control valve 106 is connected to ECU 202 and/or multi-fueling controller 250. Control valve 106 is operable to provide a second fuel flow from second fuel source 104 in an amount determined by ECU 202 and/or multi-fueling controller 250 that achieves a desired substitution of the second fuel for the first fuel, or to provide additional amounts of the second fuel for aftertreatment regeneration. In another embodiment, a second fuel pump may be provided to pressurize the fuel from second fuel source 104.

ECU 202 and/or multi-fueling controller 250 can be connected to actuators, switches, or other devices associated with fuel pump 105, control valve 106, intake throttle 76, compressor bypass valve 74, shutoff valve 112, wastegate 70, injectors 116, 117, 118, 119, bypass valves for EGR systems 51, 60, bypass valves for charge air cooler 36, and/or intake valves and exhaust valves for cylinders 31. ECU 202 and/or multi-fueling controller 250 is configured to provide control commands thereto that regulate the amount, timing and duration of injection of fuel from fuel sources 102, 104 to cylinders 31 and/or to exhaust system 24. ECU 202 and/or multi-fueling controller 250 is also configured to control deactivation of one or more cylinders 31, the charge flow, the exhaust flow, the EGR flow, the charge flow temperatures, the intake and/or exhaust valve opening timing and/or duration, the exhaust temperatures, and other actuators to provide the desired power and exhaust output from multi-fuel engine 30. The positioning of each of intake throttle 76, compressor bypass valve 74, wastegate 70, injectors 116, 117, 118, 119, EGR bypass valve, charge air cooler bypass valve, and/or the on/off status of fuel pump 105 and control valve 106 can be controlled via control commands from ECU 202 and/or multi-fueling controller 250.

In other embodiments, a first subset of cylinders 31 is associated with a first cylinder bank (not shown) and a second subset of cylinders 31 is associated with a second cylinder bank. Accordingly, differing substitution rates of the gaseous fuel can be used for the cylinder banks. In certain embodiments of engines with multiple cylinder banks, the feed lines for the gaseous fuel can be separately controlled to each cylinder bank to provide the desired substitution rate of the gaseous fuel for the respective cylinder bank.

In certain embodiments of the systems disclosed herein, ECU 202 and/or multi-fueling controller 250 is structured and configured to perform certain operations to control engine operations and fueling of cylinders 31 with fueling system 21 to provide the desired operational outcomes. ECU 202 and/or multi-fueling controller 250 may be in communication with each of the sensors and actuators disclosed herein in a number of manners including, for example, through direct communication, communication over a controller area network, communication over a datalink, and/or through communication with other controllers or portions of the processing subsystem that provide sensor and/or actuator information to ECU 202 and/or multi-fueling controller 250.

Example and non-limiting implementation elements for electronic control system 200 include sensors providing any value determined herein, sensors providing any value that is a precursor to a value determined herein, datalink and/or network hardware including communication chips, oscillating crystals, communication links, cables, twisted pair wiring, coaxial wiring, shielded wiring, transmitters, receivers, and/or transceivers, logic circuits, hardwired logic circuits, reconfigurable logic circuits in a particular non-transient state configured according to the module specification, any actuator including at least an electrical, hydraulic, or pneumatic actuator, a solenoid, an op-amp, analog control elements (springs, filters, integrators, adders, dividers, gain elements), and/or digital control elements.

Certain operations described herein include operations to interpret and/or to determine one or more parameters. Interpreting or determining, as utilized herein, includes receiving values by any method known in the art, including at least receiving values from a datalink or network communication, receiving an electronic signal (e.g. a voltage, frequency, current, or PWM signal) indicative of the value, receiving a computer generated parameter indicative of the value, reading the value from a memory location on a non-transient computer readable storage medium, receiving the value as a run-time parameter by any means known in the art, and/or by receiving a value by which the interpreted parameter can be calculated, and/or by referencing a default value that is interpreted to be the parameter value.

With reference to FIG. 3 there is illustrated an exemplary electronic control system 200 which includes ECU 202, multi-fueling controller 250, and a plurality of sensors 204. The sensors 204 may be physical sensors that provide actual measurements, or virtual sensors that derive a predicted or estimated value from one or more other measurements. Electronic control system 200 may also include an external interface 206 that can communicate with a remote server 208 or other remote device or system, such as may be part of a fleet management network or other computer network. In an embodiment, remote server 208 can be used to manage fuel substitution of the second fuel for the first fuel to maximize emissions credits for a vehicle using engine system 20 and/or across a fleet of vehicles that use engine systems 20. The remote server 208 can also record the amount and/or characteristic type of fuel substitution that occurs, such as the amount and characteristic of renewable hydrogen fuel and the amount and characteristic of non-renewable hydrogen fuel that is substituted for the first fuel, in order to track and obtain emissions credits, such as carbon offset credits, based on the overall renewable characteristic of the hydrogen fuel used in the substitution.

The sensors 204 of electronic control system 200 may include one or more engine sensors 210 in communication with ECU 202 and/or multi-fueling controller 250. The engine sensors 210 can include, for example, engine speed sensors, intake manifold pressure and temperature sensors, exhaust manifold pressure and temperatures, mass flow sensors, in-cylinder pressure sensors, knock sensors, and other sensors. Electronic control system 200 may also include one or more aftertreatment sensors 212 in communication with ECU 202 and/or multi-fueling controller 250. Aftertreatment sensors 212 may include, for example, one or more NOx sensors, CO2 sensors, particulate sensors, pressure sensors, temperature sensors, engine output sensors, and/or system/tailpipe output sensors. Electronic control system 200 may also include one or more fueling sensors 214 in communication with ECU 202 and/or multi-fueling controller 250. Fueling sensors 214 may include pressure sensors that measure the pressure at any of the injectors 116, 117, 118, 119 and/or at fuel sources 102, 104, such as a pressure in each of the tanks that store hydrogen fuel at second fuel source 104. Fueling sensors 214 may also include timers that measure a duration of a fuel injection event, a time period between re-fueling events, and other time parameters related to operation of multi-fuel fueling system 21. Electronic control system 200 may also include one or more location sensors, such as a global positioning system (GPS) sensor, the indicates a location of a vehicle using engine system 20 and/or across a fleet of vehicles that use engine systems 20.

ECU 202 and/or multi-fueling controller 250 utilizes the information received from electronic control system 200 in determining commands for controlling various operational aspects of engine system 20 and/or fueling system 21, for example, engine control commands, fueling control commands including controlling the substitution of the second fuel for the first fuel, transmission shift commands, cylinder deactivation commands, intake valve and/or exhaust valve timing commands, wastegate/turbocharger position commands, EGR bypass and charge air cooler bypass valve commands, intake throttle commands, and brake actuation commands, among others. ECU 202 and/or multi-fueling controller 250 may also utilize the information received from electronic control system 200 to control substitution of the second fuel for the first fuel in order to obtain emissions reductions, emissions credits, aftertreatment component regeneration, improved performance, and other operational outcomes for engine system 20. ECU 202 may utilize the information received from electronic control system 200 and other external sources, such as route data, weather data, traffic data, fuel cost, obtainable emissions credits, and the like to make predictions about one or more future conditions relating to the vehicle environment, location and mission including, for example, future vehicle velocity, acceleration, stopping, idle, and fuel usage conditions to control the substitution of the second fuel for the first fuel.

External interface 206 may be configured to allow a vehicle operator, fleet manager, or another person to provide additional information from a source external to the engine system 20. External interface 206 may receive information from a touch screen display, keypad, a satellite-based global positioning (GPS) system, or other device through which information may be input. External interface 206 may also comprise a wireless communication system allowing a person remote from engine system 20 to input information.

The provided information may include information relating to the existence and/or duration of extended idle conditions, mission performance parameters (e.g., mission route, mission length, length or duration of certain mission activities, platooning or convoying opportunities, route planning, and weather or traffic planning), requirements for shore power (e.g., auxiliary power unit (APU) devices such as no-idle climate control systems or other power take off (PTO) devices), among other information. The provided information may include vehicle location information that is provided to ECU 202 and/or multi-fueling controller 250 by a GPS system as a wireless signal from a satellite-based global positioning system. ECU 202 and/or multi-fueling controller 250 may utilize the GPS information to determine corresponding parameters in a vehicle cost factor module, for example, vehicle location, vehicle altitude and road grade, as well as predictions of future conditions for such parameters. The provided information may include information related to system specific factors including, for example, fuel cost, fuel type (renewable hydrogen, non-renewable hydrogen, and/or renewable characteristics of renewable and non-renewable hydrogen fuel that is used), fuel availability from each fuel source 102, 104, fuel supply or purchase agreements, sociability constraints, peak performance requests, and on/off-road use, among others. The provided information may include information related to fleet-specified factors including, for example, emissions banking and credit trading, load management, and customer or fleet operator preferences. ECU 202 and/or multi-fueling controller 250 may utilize the information provided by electronic control system 200 including from external interface 206 to determine corresponding fueling parameters for substituting the second fuel for the first fuel in fueling system 21 to operate multi-fuel engine 30.

Electronic control system 200 may include multi-fueling controller 250 in operative communication with ECU 202. It shall be appreciated that ECU 202 and multi-fueling controller 250 may be implemented in a single control system component or multiple control system components depending on the form in which ECU 202 is provided. In an embodiment, ECU 202 may also include additional or alternate controllers including, for example, transmission controllers, aftertreatment system controllers and vehicle system controllers, among others. ECU 202 is structured to provide one or more inputs received from engine system 20 and/or fueling system 21 to multi-fuel controller 250.

ECU 202 and/or multi-fueling controller 250 may be structured and configured to control a number of aspects of the operation of multi-fuel engine 30 and other associated elements of engine system 20 and fueling system 21 including, for example, air handling, provision of a first and second fuel types, exhaust component regeneration, and exhaust aftertreatment, among others. In certain embodiments, the first fuel type is diesel fuel and ECU 202 is structured and configured to control provision of the first fuel type using closed loop PI controls which determine diesel combustion parameters to achieve a target engine speed, torque or power. The diesel combustion parameters may include charge flow, EGR fraction, turbocharger boost pressure, turbine geometry, total fueling, number of injection pulses, timing of injection pulses, distribution of fuel quantity among multiple injection pulses, injector rail pressure, and/or other parameters influencing combustion.

ECU 202 and/or multi-fueling controller 250 may be structured to control operation of engine system 20 and fueling system 21 in a first fuel mode in which the first fuel is the primary or sole fuel supplied to the multi-fuel engine 30. ECU 202 and/or multi-fueling controller 250 may reference one or more fueling tables, maps, models, control algorithms, or other fueling rate/amount determination sources (collectively "first fuel table") to determine one or more fuel injection parameters. For example, ECU 202 and/or multi-fueling controller 250 may reference the first fuel table, to determine one or more injection parameters relating to the timing, amount, and/or pressure at which first fuel is to be injected into the combustion chambers by the fuel injectors 116. The determined injection parameter(s) may then be used by ECU 202 and/or multi-fueling controller 250 to control the operation of the engine system 20, including the multi-fuel fueling system 21, in at least an attempt to attain desired torque and/or exhaust output from the engine system 20. For example, the ECU 202 and/or multi-fueling controller 250 may use the determined injection parameter to provide commands associated with the timing and duration at which the fuel injectors 116 are to inject the first fuel into the combustion chambers.

It shall be appreciated that ECU 202 and/or multi-fueling controller 250 is one example of a controller that is structured to receive and process inputs from vehicle operator controls (e.g., accelerator, brake, gear change and other inputs from operator control devices) and to generate engine control outputs responsive to the operator inputs. A variety controllers with additional and alternate features are also contemplated as would occur to one of skill in the art with the benefit of the present disclosure.

A substitution rate or amount of a second fuel type may be determined by other electronic control system 200 such as by ECU202 and/or multi-fueling controller 250. ECU 202 and/or multi-fuel controller 250 may not have information of the substitution rate or amount but may still regulate first fuel combustion parameters without this information, for example, using closed loop PI or PID controls which vary certain first fuel combustion parameters based upon the feedback condition (e.g., engine speed, torque, power, etc.).

For example, multi-fueling controller 250 may be structured and configured to provide one or more control outputs influencing the provision of one or more fuels for combustion by an engine. In certain embodiments multi-fueling controller 250 is structured to determine a substitution rate for replacing a portion of the first fuel with a second fuel such as hydrogen. As noted above, in certain forms the first fuel is diesel fuel the provision of which may be controlled by ECU 202 and/or multi-fueling controller 250. In certain forms the second fuel is a gaseous fuel such as hydrogen. Other embodiments contemplate the first fuel and/or the second fuel can be any type of fuel disclosed herein. Multi-fueling controller 250 may be structured to determine a gaseous fuel substitution rate based upon a one or more engine operating parameters as well as information provided by external sources 206. The engine operating parameters may include, for example, air-to-fuel ratio (AFR) information for the first fuel type, engine load, engine speed and other factors influencing the multi-fuel combustion, including, for example, any of the aforementioned plurality of parameters and/or any of the aforementioned plurality of future conditions which are prognosticated or predicted.

Multi-fueling controller 250 may be structured and configured to control in part operation of engine system 20 and fueling system 21 in a dual-fuel mode such that a combination of the first fuel and hydrogen fuel are supplied to the engine 30, multi-fuel controller 250 may reference one or more fueling tables, maps, models, control algorithms, or other fueling rate/amount determination sources (collectively "dual-fuel table") to determine injection parameters for the first fuel while the engine system 20 is operating in the dual-fuel mode. Similar to the first fuel table, the dual-fuel table may be utilized to determined injection parameter(s) that are used by the electronic control system 200 to control the operation of the engine system 20, including the fueling system 21, in at least an attempt to attain desired torque and/or exhaust output from the multi-fuel engine 30, including, for example, operation parameters relating to the injection of the first fuel into the combustion chambers by direct injectors 116 and the second fuel by direct injectors 117 and/or port injectors 118.

It shall be appreciated that multi-fueling controller 250 is one example of a controller that is structured to receive and process vehicle system condition inputs (e.g., intake pressure, temperature, flow rate, humidity, cylinder pressure, exhaust pressure and flow rate and other inputs pertaining the operating conditions of the engine and vehicle) and to generate a second set of engine control outputs responsive to the engine system condition inputs. A variety controllers with additional and alternate features are also contemplated as would occur to one of skill in the art with the benefit of the present disclosure.

One or more of the controllers of electronic control system 200 may be utilized in performing an emissions credit optimization based on the amount of second fuel substituted for the first fuel and the renewable characteristic of the second fuel utilized in the substitution, such as renewable versus non-renewable fuel, and/or renewable characteristic of the hydrogen fuel used during substitution, and/or a renewable characteristic of the first fuel utilized over time. It shall be appreciated that the terms emissions credit optimization and emissions credit as used here refer to and encompass optimization of emissions credits that are available by substituting the second fuel for the first fuel. In certain embodiments ECU 202 and/or multi-fueling controller 250 may perform the emissions credit optimization alone. In certain embodiments both ECU 202 and multi-fueling controller 250 may operate together to perform the emissions credit optimization. Other combinations of controllers are also contemplated.

Regardless of which controllers participate in emissions credit optimization, a plurality of factors may be recorded and optimized concurrently or in sequence. A number of techniques may be utilized in this optimization. Lookup tables may be utilized and may include real time mappings based on prior characterizations. Simple adaptive models may be utilized to key-in on a selected number of factors to find an association which can be utilized in optimization. Neural networks may be utilized which have pre-learned associations to provide rapid optimization assessments. System ID approaches may be utilized to provide a mathematical models that is tuned in real time to determine convergence of unknown coefficients based on streaming data.

It shall be appreciated that ECU 202 and multi-fueling controller 250 provide one example of controllers that are structured to operate concurrently (e.g., in parallel or in interleaved sequence) to control the engine to combust variable proportions of the first fuel type and the second fuel type in response to operator controls inputs, engine system condition inputs, and external inputs. By way of further example, in certain embodiments the engine system condition inputs may comprise air-to-fuel ratio information for the first fuel type and the second set of engine control outputs comprise a substitution rate for the second fuel type. The substitution rate may be determined by selecting and utilizing one of a plurality of substitution rate lookup tables configured with respective sets of predetermined substitution rates. The emissions credit optimization may be structured to vary the selection and utilization of one of the plurality of substitution rate lookup tables. External inputs can comprise cost information for the first fuel type and the second fuel type at a geographic location along a travel route of the vehicle, availability of emissions credits, the value of available emissions credits, emissions credit market conditions, and other factors. The emissions credits optimization outputs may be structured to vary the selection and utilization of one of the plurality of lookup tables responsive to optimized emissions credits between the first fuel type and the second fuel type.

The emissions credit optimization outputs described herein may result in selection of substitution rate tables that are more aggressive (*i.e.,* provide for greater substitution of the second fuel type) when the emissions credit optimization indicates that increased consumption of the second fuel type maximizes emissions credits as determined by the optimization. The emissions credit optimization may alternatively result in selection of substitution rate tables that are less aggressive (*i.e.,* provide for less substitution of the second fuel type such as when the available hydrogen fuel has a low of zero renewable characteristic) when the emissions credit optimization indicates that decreased consumption of the second fuel type or increased consumption of the first fuel type minimizes loss of emissions credits as determined by the optimization. It shall be further appreciated that the fuel-type optimization provides only one example of emissions credit optimization influence on substitution rate decisions. It is further contemplated that the vehicle operator may provide input that varies the weighting of emissions credit factors being optimized, for example, to prefer performance over emissions credit utilization. Such information may also be transmitted from sources external to engine system 20, for example, from a centralized control center such as remote server 208 managing a fleet of vehicles.

With reference to FIG. 4 there is illustrated a flow diagram of an exemplary control method or process 400. Process 400 may be implemented in and executed by electronic control system 200 by, for example, ECU 202 and/or multi-fuel controller 250. Process 400 starts at operation 402 and proceeds to operation 404 to operate multi-fuel engine 30 to combust a first fuel type and a second fuel such as hydrogen to produce an exhaust flow. Process 400 continues at operation 406 to substitute the second fuel for the first fuel for a period of time. Process 400 continues from operation 406 at operation 408 to determine an amount and renewable characteristic of the second fuel substituted for the first fuel over the period of time.

In an embodiment of process 400, an amount and a characteristic of renewable hydrogen fuel and a non-renewable characteristic of non-renewable hydrogen fuel substituted for the first fuel over the period of time is determined. In an embodiment, process 400 may also determine an amount and renewable characteristic of the first fuel used over the time period. An emissions credit is obtained based on the amount and the renewable characteristic of the hydrogen fuel or proportion of renewable of hydrogen fuel that is determined to be substituted for the first fuel and/or the amount of renewable first fuel used versus non-renewable first fuel. In an embodiment, hydrogen fuel with different renewable characteristics may be provided over the period of time, and the amount of substituted second fuel is determined as a blended percentage of renewable characteristics of the hydrogen fuel provided over the period of time that was used in the substitution for the first fuel.

The amount of the renewable hydrogen fuel that is substituted as the second fuel can be determined by any suitable means. In an embodiment, the amount of hydrogen fuel that is substituted is determined by determining a change in pressure and temperature of a tank from which the hydrogen fuel is provided over the period of time. The change in pressure and temperature over the period of time provides an indication of the amount of hydrogen fuel that is substituted for the first fuel over the period of time. In another embodiment, the injection pressure and injection duration (injector on-time) of the second fuel from direct injectors 117 and/or from port injectors 118 is measured and recorded to determine the amount of the second fuel that is injected over the period of time. The renewable characteristic of hydrogen fuel that is used in providing the amount of hydrogen fuel can also be recorded so that an appropriate emissions credit or other carbon offset can be utilized depending on how "green" the total amount of hydrogen fuel is that was substituted for the first fuel over the period of time.

In an embodiment of process 400, the substitution of hydrogen fuel is adjusted in response to an emissions credit optimization that maximizes utilization of emissions credits based on one or more optimization factors discussed above. For example, the nominal substitution rate of the second fuel for the first fuel can be increased to take advantage of available emissions credits on a per vehicle basis or across a fleet of vehicles. The substitution amount and renewable characteristic of second fuel that is used in the substitution can be recorded by electronic control system 200 and reported to the operator, vehicle owner, manufacturer of engine system 20, and/or government agency.

In an embodiment, engine system 20 includes multi-fuel engine 30, which is configured to selectably combust a plurality of proportions of the first fuel and the second fuel to produce an exhaust flow. In an embodiment, the second fuel is a hydrogen fuel, and the first fuel is not a hydrogen fuel. Fueling system 21 is operably connected to multi-fuel engine 30 and includes first fuel source 102 configured to provide the first fuel to multi-fuel engine 30 and second fuel source 104 configured to provide the second fuel to multi-fuel engine 30. Electronic control system 200 is in operative communication with multi-fuel engine 30 and fueling system 21. Electronic control system 200 is configured to determine an amount and a renewable characteristic of the second fuel substituted for the first fuel over a period of time.

In an embodiment, the second fuel source 104 includes at least one tank for storing the hydrogen fuel, and electronic control system 200 is configured to determine the amount of the second fuel substituted for the first fuel based on a change in pressure and temperature of the at least one tank over the period of time. In an embodiment, fueling system 21 includes at least one injector 117, 118 connected to second fuel source 194, and electronic control system 200 is configured to determine the amount of the second fuel substituted for the first fuel based on an injection pressure and an on-time for the at least one injector 117, 118 during which the second fuel is being injected over the period of time.

In an embodiment, electronic control system 200 is configured to determine a renewable characteristic of the second fuel that is substituted for the first fuel. In an embodiment, electronic control system 200 is configured to determine a renewable characteristic of the total amount of the second fuel provided over the period of time based on a proportion of renewable hydrogen fuel and non-renewable hydrogen fuel provided during the period of time. For example, the amount of the second fuel that is injected and its renewable characteristic can be determined by and stored in electronic control system 200 as "green hydrogen" which is 100% renewable, or other types that have less than a 100% renewable characteristic, such as "blue hydrogen", "gray hydrogen", "pink hydrogen", "brown hydrogen", "black hydrogen", and/or "turquoise hydrogen". The amount of second fuel injected for each type may be determined and tracked separately, or usage amounts and fuel types used may be combined or averaged to provide a blended percentage indicative of the renewable characteristic of the hydrogen fuel that is used over the period of time.

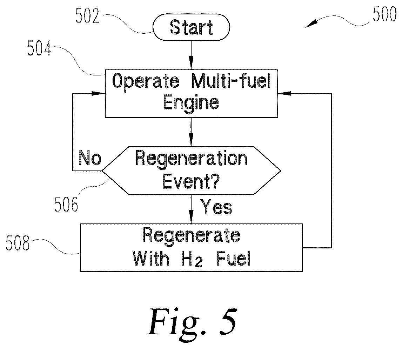

With reference to FIG. 5 there is illustrated a flow diagram of an exemplary control method or process 500. Process 500 may be implemented in and executed by electronic control system 200 by, for example, ECU 202 and/or multi-fuel controller 250. Process 500 starts at operation 502 and proceeds to operation 504 to operate multi-fuel engine 30 to combust a first fuel type and a second fuel to produce an exhaust flow where the second fuel is a hydrogen fuel. Process 500 continues at operation 506 to determine a regeneration event is present for regeneratable component 82 in exhaust system 24 that receives the exhaust flow.

If conditional 506 is NO, process 500 returns to operation 504. If conditional 506 is YES, process 500 continues at operation 508 to regenerate regeneratable component 82 with the second fuel in response to the regeneration event.

In an embodiment, process 500 includes regenerating regeneratable component 82 by deactivating one or more cylinders 31 of multi-fuel engine 30 and providing the second fuel to the regeneratable component through the deactivated one or more cylinders 31. The second fuel can be, for example, injected by port injectors 118 upstream of the deactivated cylinder(s) 31 so that the injected second fuel is carried through the deactivated cylinder(s) into the exhaust flow to regeneratable component 82.

In an embodiment, the one or more cylinders 31 are deactivated by stopping the injection of the first fuel. In embodiments in which the second fuel is provided by direct injection, the intake valves of the deactivated one or more cylinders 31 can remain shut during deactivation. In embodiments in which the second fuel is port injected or mixed upstream of the one or more cylinders 31, then the intake valves and exhaust valves of the deactivated one or more cylinder are not maintained in a shut position to allow the second fuel to be used for regeneration of regeneratable component 82.

In an embodiment, process 500 includes regenerating regeneratable component 82 by directly injecting the second fuel into one or more cylinders 31 of multi-fuel engine 30 in a late fuel post-injection to provide the second fuel to regeneratable component 82. The late post injection can be, for example, injected by one or more direct injectors 117 into one or more of the cylinders 31 at a post-combustion timing so that the injected fuel is carried with the exhaust output from the corresponding cylinder 31 to regeneratable component 82.

In an embodiment, regenerating the regeneratable component 82 includes directly injecting the second fuel downstream of one or more cylinders 31 of multi-fuel engine 30 to provide the second fuel to regeneratable component 82. In an embodiment, the second fuel is injected into exhaust manifold 32 by manifold injector 119 in response to the regeneration event.

In an embodiment, engine system 20 is operable to combust multiple fuels and includes multi-fuel engine 30 configured to selectably combust a plurality of proportions of a first fuel and a second fuel to produce an exhaust flow where the second fuel is a hydrogen fuel and the first fuel is not a hydrogen fuel. Engine system 20 includes fueling system 21 operably connected to multi-fuel engine 30, and fueling system 21 includes first fuel source 102 configured to provide the first fuel to multi-fuel engine 30 and second fuel source 104 configured to provide the second fuel to multi-fuel engine 30. Engine system 20 includes aftertreatment system 80 for receiving the exhaust flow produced by multi-fuel engine 30. Aftertreatment system 80 includes at least one regeneratable component 82 through which the exhaust flow passes. Electronic control system 200 is in operative communication with multi-fuel engine 30, fueling system 21, and aftertreatment system 80. Electronic control system 200 is configured to control the provision of the second fuel from second fuel source 104 to regenerate the at least one regeneratable component 82 with the second fuel in response to a regeneration event for the at least one regeneratable component 82.

In an embodiment of engine system 20, the first fuel comprises a liquid fuel injected directly into cylinders 31 of multi-fuel engine 30. The second fuel comprises gaseous hydrogen fuel provided to the cylinders 31 via port injection. In an embodiment, the second fuel is a fuel other than hydrogen fuel. In an embodiment the second fuel is a fuel that is not in a gas phase during storage and/or when delivered for combustion.

In an embodiment, multi-fuel engine 30 includes a plurality of cylinders 31 for combusting the first fuel and the second fuel. Fueling system 21 includes at least one direct injector 116 for each of the plurality of cylinders 31, and each of the at least one direct injectors 116 is connected to first fuel source 102. Fueling system 21 includes at least one port injector 118 connected to intake ports for each of the plurality of cylinders 31, and each of the at least one port injectors 118 is connected to second fuel source 104. Electronic control system 200 is configured to deactivate one or more of the plurality of cylinders 31 and provide the second fuel from second fuel source 104 through the deactivated one or more of the plurality of cylinders 31 to regenerate the at least one regeneratable component 82 with the second fuel in response to the regeneration event for the regeneratable component 82.

In an embodiment, multi-fuel engine 30 includes a plurality of cylinders 31 for combusting the first fuel and the second fuel, and fueling system 21 includes at least one direct injector 116 for each of the plurality of cylinders 31, and each of the at least one direct injectors 116 is connected to first fuel source 102. Fueling system 21 includes at least one additional direct injector 117 connected to at least one of the plurality of cylinders 31, and the at least one additional direct injector 117 is connected to second fuel source 104. Electronic control system 200 is configured to provide the second fuel from second fuel source 104 to the at least one of the plurality of cylinders 31 with the at least one additional direct injector 117 to regenerate the at least one regeneratable component 82 with the second fuel in response to the regeneration event for the regeneratable component 82.

In an embodiment, multi-fuel engine 30 includes a plurality of cylinders 31 for combusting the first fuel and the second fuel. Fueling system 21 includes at least one direct injector 116 for each of the plurality of cylinders 31, and each of the at least one direct injectors 116 is connected to first fuel source 102. Fueling system 21includes at least one additional injector 119 connected downstream of the plurality of cylinders, and the at least one additional injector 119 is connected to second fuel source 104. Electronic control system 200 is configured to provide the second fuel from second fuel source 104 downstream of the plurality of cylinders 31 to regenerate the at least one regeneratable component 82 with the second fuel in response to the regeneration event for the regeneratable component 82.

In an embodiment, electronic control system 200 is configured to adjust one or more operating parameters of multi-fuel engine 30 in response to a substitution rate of the second fuel for the first fuel. The one or more operating parameters include: an injection timing of the first fuel; an injection timing of the second fuel; an injection duration of the first fuel and/or the second fuel; an injection amount for the first fuel and/or the second fuel; a number of injection events for the first fuel and/or the second fuel; an injection timing for one or more of multiple injections events for the first fuel and/or the second fuel; an intake valve and/or exhaust valve opening and closing timing; an exhaust gas recirculation amount; an exhaust gas recirculation cooler and/or a charge air cooler bypass amount; a waste gate position; and/or a position of a variable geometry turbine.

In an embodiment, electronic control system 200 is configured to adjust a substitution rate of the second fuel for the first fuel in response to one or more emissions feedback signals. The one or more emissions feedback signals include: a NOx sensor signal; a CO2 sensor signal; a particulate matter sensor signal; a temperature sensor signal; an engine-out sensor signal; and/or a system-out sensor signal.

In an embodiment, electronic control system 200 is configured to adjust a substitution rate of the second fuel, regardless of a type of hydrogen fuel available for substitution as the second fuel, for the first fuel in response to one or more emissions feedback signals and/or a vehicle location for the purposes for reducing engine-out and/or tailpipe emissions, such as particulate matter and/or NOx. In an embodiment, the substitution of the second fuel for the first fuel regardless of the type of hydrogen fuel used as the second fuel is performed when one or more sensors indicate a problem with the engine and/or aftertreatment system. Substitution of the lower carbon second fuel for the first fuel can maintain compliance with an emissions standards. In an embodiment, the substitution of the lower carbon second fuel for the first fuel is increased or prioritized based on a location of the vehicle in an area, region, city, state, or country having more stringent emissions requirements than adjacent areas, regions, cities, states, or countries.

Various aspects and embodiments of the present disclosure are contemplated. For example, according to one aspect, an engine system operable to combust multiple fuels is provided. The engine system includes a multi-fuel engine configured to selectably combust a plurality of proportions of a first fuel and a second fuel to produce an exhaust flow, where the second fuel is a hydrogen fuel and the first fuel is not a hydrogen fuel. The engine system also includes a fueling system operably connected to the multi-fuel engine. The fueling system includes a first fuel source configured to provide the first fuel to the multi-fuel engine and a second fuel source configured to provide the second fuel to the multi-fuel engine. The engine system further includes an aftertreatment system for receiving the exhaust flow produced by the multi-fuel engine. The aftertreatment system includes at least one regeneratable component through which the exhaust flow passes. The engine system also includes an electronic control system in operative communication with the multi-fuel engine, the fueling system, and the aftertreatment system. The electronic control system is configured to control the provision of the second fuel from the second fuel source to regenerate the at least one regeneratable component with the second fuel in response to a regeneration event for the at least one regeneratable component.

In an embodiment of the engine system, the first fuel comprises a liquid fuel injected directly into a cylinder of the multi-fuel engine and the second fuel type comprises a gaseous hydrogen fuel provided to the cylinder with port injection.

In an embodiment of the engine system, the multi-fuel engine includes a plurality of cylinders for combusting the first fuel and the second fuel. The fueling system includes at least one direct injector for each of the plurality of cylinders, and each of the at least one direct injectors is connected to the first fuel source. The fueling system includes at least one port injector connected to intake ports for each of the plurality of cylinders, and each of the at least one port injectors is connected to the second fuel source. The electronic control system is configured to deactivate one or more of the plurality of cylinders and provide the second fuel from the second fuel source through the deactivated one or more of the plurality of cylinders to regenerate the at least one regeneratable component with the second fuel in response to the regeneration event for the regeneratable component.

In an embodiment of the engine system, the multi-fuel engine includes a plurality of cylinders for combusting the first fuel and the second fuel. The fueling system includes at least one direct injector for each of the plurality of cylinders, and each of the at least one direct injectors is connected to the first fuel source. The fueling system includes at least one additional direct injector connected to at least one of the plurality of cylinders, and the at least one additional direct injector is connected to the second fuel source. The electronic control system is configured to provide the second fuel from the second fuel source to the at least one of the plurality of cylinders with the at least one additional direct injector to regenerate the at least one regeneratable component with the second fuel in response to the regeneration event for the regeneratable component.

In an embodiment of the engine system, the multi-fuel engine includes a plurality of cylinders for combusting the first fuel and the second fuel. The fueling system includes at least one direct injector for each of the plurality of cylinders, and each of the at least one direct injectors is connected to the first fuel source. The fueling system also includes at least one additional injector connected downstream of the plurality of cylinders, and the at least one additional injector is connected to the second fuel source. The electronic control system is configured to provide the second fuel from the second fuel source downstream of the plurality of cylinders to regenerate the at least one regeneratable component with the second fuel in response to the regeneration event for the regeneratable component.

In an embodiment of the engine system, the electronic control system is configured to adjust one or more operating parameters of the multi-fuel engine in response to a substitution rate of the second fuel for the first fuel.

In an embodiment of the engine system, the one or more operating parameters include an injection timing of the first fuel; an injection timing of the second fuel; an intake valve and/or exhaust valve opening and closing timing; an exhaust gas recirculation amount; an exhaust gas recirculation cooler and/or a charge air cooler bypass amount; a waste gate position; and/or a position of a variable geometry turbine.

In an embodiment of the engine system, the electronic control system is configured to adjust a substitution rate of the second fuel for the first fuel in response to one or more emissions feedback signals.

In an embodiment of the engine system, the one or more emissions feedback signals include: a NOx sensor signal; a CO2 sensor signal; a particulate matter sensor signal; a temperature sensor signal; an engine-out sensor signal; and/or a system-out sensor signal.

According to another aspect of the present disclosure, an engine system is operable to combust multiple fuels. The engine system includes a multi-fuel engine configured to selectably combust a plurality of proportions of a first fuel and a second fuel to produce an exhaust flow, where the second fuel is a hydrogen fuel and the first fuel is not a hydrogen fuel. The engine system includes a fueling system operably connected to the multi-fuel engine. The fueling system includes a first fuel source configured to provide the first fuel to the multi-fuel engine and a second fuel source configured to provide the second fuel to the multi-fuel engine. The engine system also includes an electronic control system in operative communication with the multi-fuel engine and the fueling system. The electronic control system is configured to determine an amount and a renewable characteristic of the second fuel substituted for the first fuel over a period of time.

In an embodiment of the engine system, the second fuel source includes at least one tank for storing the hydrogen fuel, and the electronic control system is configured to determine the amount of the second fuel substituted for the first fuel based on a change in pressure and temperature of the at least one tank over the period of time.

In an embodiment of the engine system, the fueling system includes at least one injector connected to the second fuel source, and the electronic control system is configured to determine the amount of the second fuel substituted for the first fuel based on an injection pressure and an on-time for the at least one injector during which the second fuel is being injected over the period of time.

In an embodiment of the engine system, the electronic control system is further configured to determine a renewable characteristic of hydrogen fuel and a renewable characteristic of non-renewable hydrogen fuel of the second fuel that is substituted for the first fuel over the period of time.

In an embodiment of the engine system, the electronic control system tracks a renewable characteristic of the first fuel, such as whether the first fuel is renewable diesel fuel (e.g. hydrotreated vegetable oil) versus fossil diesel fuel.

In an embodiment of the engine system, the electronic control system is configured to determine a renewable characteristic of the total amount of the second fuel provided over the period of time based on a proportion of renewable hydrogen fuels and non-renewable hydrogen fuels and the renewable characteristics of the renewable hydrogen fuels and non-renewable hydrogen fuels provided over the period of time.

According to another aspect of the present disclosure, a method of operating a multi-fuel engine includes: operating the multi-fuel engine to combust a first fuel and a second fuel to produce an exhaust flow, wherein the second fuel is a hydrogen fuel; determining a regeneration event is present for a regeneratable component in an exhaust system that received the exhaust flow; and regenerating the regeneratable component with the second fuel in response to the regeneration event.

In an embodiment of the method, regenerating the regeneratable component includes deactivating one or more cylinders of the multi-fuel engine and providing the second fuel to the regeneratable component through the deactivated one or more cylinders.

In an embodiment of the method, regenerating the regeneratable component includes directly injecting the second fuel into one or more cylinders of the multi-fuel engine in a late fuel post-injection to provide the second fuel to the regeneratable component.

In an embodiment of the method, regenerating the regeneratable component includes directly injecting the second fuel downstream of one or more cylinders of the multi-fuel engine to provide the second fuel to the regeneratable component.

According to another aspect of the disclosure, a method of operating a multi-fuel engine includes: operating the multi-fuel engine to combust a first fuel and a second fuel to produce an exhaust flow, wherein the second fuel is a hydrogen fuel; substituting the second fuel for the first fuel for a period of time; and determining an amount and a renewable characteristic of the second fuel substituted for the first fuel over the period of time.

In an embodiment, the method includes determining the amount and the renewable characteristic of the second fuel by determining an amount and a renewable characteristic of renewable hydrogen fuel and an amount and a renewable characteristic of non-renewable hydrogen fuel substituted for the first fuel over the period of time; and obtaining an emissions credit based on the amount and the renewable characteristic of the renewable and non-renewable hydrogen fuel that is determined to be substituted for the first fuel over the period of time.

According to another aspect, a method of operating a multi-fuel engine includes: operating the multi-fuel engine to combust a first fuel and a second fuel to produce an exhaust flow to an aftertreatment system, wherein the second fuel is a hydrogen fuel having a lower carbon content than the first fuel; and substituting the second fuel for the first fuel in response to an emissions feedback signal indicating a problem with emissions from the multi-fuel engine or aftertreatment system and/or a vehicle location to maintain compliance with a local emissions standard.

While the invention has been illustrated and described in detail in the drawings and foregoing description, the same is to be considered as illustrative and not restrictive in character, it being understood that only certain exemplary embodiments have been shown and described and that all changes and modifications that come within the spirit of the inventions are desired to be protected. It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. An engine system operable to combust multiple fuels, the engine system comprising:
a multi-fuel engine configured to selectably combust a plurality of proportions of a first fuel and a second fuel to produce an exhaust flow, wherein the second fuel is a hydrogen fuel and the first fuel is not a hydrogen fuel;
a fueling system operably connected to the multi-fuel engine, the fueling system including a first fuel source configured to provide the first fuel to the multi-fuel engine and a second fuel source configured to provide the second fuel to the multi-fuel engine;
an aftertreatment system for receiving the exhaust flow produced by the multi-fuel engine, the aftertreatment system including at least one regeneratable component through which the exhaust flow passes; and
an electronic control system in operative communication with the multi-fuel engine, the fueling system, and the aftertreatment system, the electronic control system being configured to control the provision of the second fuel from the second fuel source to regenerate the at least one regeneratable component with the second fuel in response to a regeneration event for the at least one regeneratable component.

2. The engine system of claim 1, wherein the first fuel comprises a liquid fuel injected directly into a cylinder of the multi-fuel engine and the second fuel type comprises a gaseous hydrogen fuel provided to the cylinder with port injection.

3. The engine system of claim 1 wherein:
the multi-fuel engine includes a plurality of cylinders for combusting the first fuel and the second fuel;
the fueling system includes at least one direct injector for each of the plurality of cylinders, each of the at least one direct injectors connected to the first fuel source; and wherein:
(a) the fueling system includes at least one port injector connected to intake ports for each of the plurality of cylinders, each of the at least one port injectors connected to the second fuel source; and
the electronic control system is configured to:
deactivate one or more of the plurality of cylinders; and
provide the second fuel from the second fuel source through the deactivated one or more of the plurality of cylinders to regenerate the at least one regeneratable component with the second fuel in response to the regeneration event for the regeneratable component, or
(b) the fueling system includes at least one additional direct injector connected to at least one of the plurality of cylinders, the at least one additional direct injector connected to the second fuel source; and
the electronic control system is configured to:
provide the second fuel from the second fuel source to the at least one of the plurality of cylinders with the at least one additional direct injector to regenerate the at least one regeneratable component with the second fuel in response to the regeneration event for the regeneratable component, or
(c) the fueling system includes at least one additional injector connected downstream of the plurality of cylinders, the at least one additional injector connected to the second fuel source; and
the electronic control system is configured to:
provide the second fuel from the second fuel source downstream of the plurality of cylinders to regenerate the at least one regeneratable component with the second fuel in response to the regeneration event for the regeneratable component.

4. The engine system of claim 1, wherein the electronic control system is configured to adjust one or more operating parameters of the multi-fuel engine in response to a substitution rate of the second fuel for the first fuel.

5. The engine system of claim 4, wherein the one or more operating parameters include:
an injection timing of the first fuel;
an injection timing of the second fuel;
an intake valve and/or exhaust valve opening and closing timing;
an exhaust gas recirculation amount;
an exhaust gas recirculation cooler and/or a charge air cooler bypass amount;
a waste gate position; and/or
a position of a variable geometry turbine.

6. The engine system of claim 1, wherein the electronic control system is configured to adjust a substitution rate of the second fuel for the first fuel in response to one or more emissions feedback signals.

7. The engine system of claim 6, wherein the one or more emissions feedback signals include:
a NOx sensor signal;
a CO2 sensor signal;
a particulate matter sensor signal;
a temperature sensor signal;
an engine-out sensor signal; and/or
a system-out sensor signal.

8. An engine system operable to combust multiple fuels, the engine system comprising:
a multi-fuel engine configured to selectably combust a plurality of proportions of a first fuel and a second fuel to produce an exhaust flow, wherein the second fuel is a hydrogen fuel and the first fuel is not a hydrogen fuel;
a fueling system operably connected to the multi-fuel engine, the fueling system including a first fuel source configured to provide the first fuel to the multi-fuel engine and a second fuel source configured to provide the second fuel to the multi-fuel engine; and
an electronic control system in operative communication with the multi-fuel engine and the fueling system, the electronic control system being configured to determine an amount and a renewable characteristic of the second fuel substituted for the first fuel over a period of time.

9. The engine system of claim 8, wherein
(a) the second fuel source includes at least one tank for storing the hydrogen fuel, and the electronic control system is configured to determine the amount of the second fuel substituted for the first fuel based at least in part on a change in pressure of the at least one tank over the period of time, or,
(b) the fueling system includes at least one injector connected to the second fuel source, and the electronic control system is configured to determine the amount of the second fuel substituted for the first fuel based on an injection pressure and an on-time for the at least one injector during which the second fuel is being injected over the period of time, or
(c) the electronic control system is further configured to determine a renewable characteristic of hydrogen fuel and a renewable characteristic of non-renewable hydrogen fuel of the second fuel that is substituted for the first fuel over the period of time, or
(d) the electronic control system is configured to determine a renewable characteristic of the total amount of the second fuel provided over the period of time based on a proportion of renewable hydrogen fuels and non-renewable hydrogen fuels and the renewable characteristics of the renewable hydrogen fuels and non-renewable hydrogen fuels provided over the period of time.

10. A method of operating a multi-fuel engine, the method comprising:
operating the multi-fuel engine to combust a first fuel and a second fuel to produce an exhaust flow, wherein the second fuel is a hydrogen fuel;
determining a regeneration event is present for a regeneratable component in an exhaust system that received the exhaust flow; and
regenerating the regeneratable component with the second fuel in response to the regeneration event.

11. The method of claim 10, wherein
(a) regenerating the regeneratable component includes deactivating one or more cylinders of the multi-fuel engine and providing the second fuel to the regeneratable component through the deactivated one or more cylinders, or
(b) regenerating the regeneratable component includes directly injecting the second fuel into one or more cylinders of the multi-fuel engine in a late fuel post-injection to provide the second fuel to the regeneratable component, or
(c) regenerating the regeneratable component includes directly injecting the second fuel downstream of one or more cylinders of the multi-fuel engine to provide the second fuel to the regeneratable component.

12. A method of operating a multi-fuel engine, the method comprising:
operating the multi-fuel engine to combust a first fuel and a second fuel to produce an exhaust flow, wherein the second fuel is a hydrogen fuel;
substituting the second fuel for the first fuel for a period of time; and
determining an amount and a renewable characteristic of the second fuel substituted for the first fuel over the period of time.

13. The method of claim 12, further comprising:
determining the amount and the renewable characteristic of the second fuel by determining an amount and a renewable characteristic of renewable hydrogen fuel and an amount and a renewable characteristic of non-renewable hydrogen fuel substituted for the first fuel over the period of time; and
obtaining an emissions credit based on the amount and the renewable characteristic of the renewable and non-renewable hydrogen fuel that is determined to be substituted for the first fuel over the period of time.

14. A method of operating a multi-fuel engine, the method comprising:
operating the multi-fuel engine to combust a first fuel and a second fuel to produce an exhaust flow to an aftertreatment system, wherein the second fuel is a hydrogen fuel having a lower carbon content than the first fuel; and
substituting the second fuel for the first fuel in response to an emissions feedback signal indicating a problem with emissions from the multi-fuel engine or aftertreatment system and/or a vehicle location to maintain compliance with a local emissions standard.
